(19) Europäisches Patentamt
European Patent Office
Office européen des brevets

(11) EP 4 589 261 A1

(12) EUROPEAN PATENT APPLICATION
published in accordance with Art. 153(4) EPC

(43) Date of publication:
23.07.2025 Bulletin 2025/30

(51) International Patent Classification (IPC):
G01D 5/353 (2006.01)

(21) Application number: 22958788.6

(22) Date of filing: 14.09.2022

(52) Cooperative Patent Classification (CPC):
G01D 5/353

(86) International application number:
PCT/JP2022/034477

(87) International publication number:
WO 2024/057462 (21.03.2024 Gazette 2024/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: NIPPON TELEGRAPH AND
TELEPHONE CORPORATION
Chiyoda-ku, Tokyo 100-8116 (JP)

(72) Inventors:
• WAKISAKA, Yoshifumi
  Musashino-shi, Tokyo 180-8585 (JP)
• TAKAHASHI, Hiroshi
  Musashino-shi, Tokyo 180-8585 (JP)
• IIDA, Daisuke
  Musashino-shi, Tokyo 180-8585 (JP)
• KOSHIKIYA, Yusuke
  Musashino-shi, Tokyo 180-8585 (JP)

(74) Representative: v. Bezold & Partner
Patentanwälte - PartG mbB
Ridlerstraße 57
80339 München (DE)

(54) SIGNAL PROCESSING METHOD FOR PHASE OTDR

(57) An object of the present disclosure is to enable stream processing of data and to prevent deterioration of an SN ratio and vibration measurement accuracy, without increasing memory size requirements of a calculator, even in measurement for a long period of time.

A signal processing device and a signal processing method of the present disclosure are a signal processing device and a signal processing method for performing signal processing of measurement data of scattered light, which is brought by scattering of a plurality of light pulses having different optical frequencies, in an optical fiber, and include calculating a scattered light vector $r_i$ with each of the optical frequencies of scattered light, falling within a predetermined time range in which measurement is allowed at any point of the optical fiber, averaging scattered light vectors $r_i$ with each of the optical frequencies in terms of the time range, calculating a rotation angle $\alpha_i$ for correcting a phase with each of the optical frequencies using a time average vector $r_{i\_avet}$ obtained by the averaging, and correcting the phase of the scattered light vector $r_i$ with each of the optical frequencies by rotating the phase of the scattered light vector $r_i$ of each of the optical frequencies by the rotation angle $\alpha_i$.

Fig. 1

**Description**

Technical Field

The present disclosure relates to a phase OTDR for measuring a phase of scattered light from each point of a measurement target optical fiber.

Background Art

As a means for measuring physical vibration applied to an optical fiber in a distributive manner in a longitudinal direction of the optical fiber, there is a known method called distributed acoustic sensing (DAS) in which pulsed test light is injected into a measurement target optical fiber, and backscattered light resulting from Rayleigh scattering is detected (Non Patent Literature 1).

As one of DAS methods, there is a phase optical time domain reflectometry (OTDR) that measures a phase of scattered light generated at each point of a measurement target optical fiber and observes a temporal change of the phase. The phase OTDR is also referred to as DAS-phase (DAS-P). In the DAS-P, a phase changes linearly in relation to change, caused by vibration, in the optical path length of an optical fiber, and the rate of the phase change can be also regarded as approximately the same at each point in the longitudinal direction of the optical fiber, and thus vibration can be quantitatively measured, and the vibration waveform applied to the measurement target optical fiber can be faithfully reproduced (Non Patent Literature 2, for example).

In the DAS-P using a light pulse of a single optical frequency, a point where a scattered light intensity is small is generated due to an interference effect between pieces of scattered light within a pulse width, and sensitivity is deteriorated. As a method of preventing deterioration of sensitivity, there is a method of performing optical frequency multiplexing and averaging signals regarding different optical frequencies (Non Patent Literature 3, Patent Literature 1). This method utilizes the fact that points where scattered light intensity decreases vary between different optical frequencies.

In Non Patent Literature 3 and Patent Literature 1, the following procedure is specifically performed as an efficient averaging method.

Procedure S01: A difference in a phase offset value between a scattered light vector of an optical frequency component selected, as a reference, out of multiplexed optical frequency components and a scattered light vector of each of the remaining optical frequency components is calculated using measurement data. The rotation angle for correcting a phase offset of each optical frequency is calculated using the calculated difference in the phase offset value.

Procedure S02: After each scattered light vector at each time is rotated by the rotation angle, the rotated vectors with the different optical frequencies are averaged to calculate a frequency average vector. The angular change of the frequency average vector is calculated using the frequency average vector at each of the different times.

Procedure S03: A phase difference between two points separated by a gauge length on the optical fiber is calculated using the angular change, phase connection processing or the like is performed, and a vibration waveform generated in a section between the two points is calculated.

In particular, details of the procedure S01 are as follows. Assume that the repetition interval of pulses of the same optical frequency is t, that is, the sampling interval of vibration is t, measurement data of M points, out of measurement times 0 to (M - 1)t (M is a natural number), is used, scattered light vectors with the reference optical frequency (set to $f_1$) at the respective times mt (m is an integer ranging from 0 to (M - 1)) are $r_1(mt, z)$ (depending on a distance z from the injection end due to dependence on the fiber point), and scattered light vectors with each of the remaining optical frequencies $f_i$ (i is an integer ranging from 2 to N, and N represents the multiplexing number of optical frequencies) are $r_i(mt, z)$. Here, conventionally, M is chosen to encompass all measurement time points or the first several points.

Procedure S01-1: Angles $\theta_1(mt, z)$ of the scattered light vectors $r_1(mt, z)$ with the reference optical frequency at the respective times at the respective fiber points are calculated. Assuming that the scattered light vectors $r_1(mt, z)$ are complex vectors on a complex plane, that is, complex numbers, the angles $\theta_1(mt, z)$ can be calculated by $\arg[r_1(mt, z)]$. Here, arg is an operator that gives an argument of a complex number.

Procedure S01-2: The scattered light vectors $r_i(mt, z)$ with each optical frequency at the respective times at the respective fiber points are rotated by angles $-\theta_1(mt, z)$ to be $r_{i\_rot}(mz, t)$. Assuming the scattered light vectors $r_i(mt, z)$ are complex vectors on a complex plane, the rotated vectors $r_{i\_rot}(mz, t)$ can be calculated as $\exp[-\theta_1(mt, z) * r_i(mt, z)]$.

Procedure S01-3: The vectors $r_{i\_rot}(mt, z)$, which is obtained by the rotation of the scattered light vectors with each optical frequency at the respective fiber points and separately corresponds to M points out of m ranging from 0 to (M - 1) as used measurement data, are averaged, and a time average vector $r_{i\_avet}(z)$ is calculated. A value of $+\arg[r_{i\_avet}(z)]$ is the difference in the phase offset value. In actual calculation, the vector sum may be used instead of the average of the vectors corresponding to M points. Whichever calculation is used, the same result is obtained in subsequent processing.

Procedure S01-4: A rotation angle $\alpha_i(z)$ by which the scattered light vector with each optical frequency at each fiber point is rotated in the procedure S02 is calculated as -arg[$r_{i\_avet}(z)$] using the argument of the time average vector. By rotation by -arg[$r_{i\_avet}(z)$], the difference in the phase offset can be corrected.

The rotation angle $\alpha_i(z)$ given in the procedure S01-4 is a value having an efficiently reduced noise because the time averaging is performed by the procedures up to the procedure S01-3, and by calculating the optical frequency average vector in the procedure S02 using the rotation angle $\alpha_i(z)$, the SN ratio of the final vibration waveform is improved and the waveform distortion can be reduced.

In the procedure S01 of the conventional technology, the rotation angle with each optical frequency is calculated using measurement data of M points out of the measurement time ranging from 0 to (M - 1)t (M is a natural number), and frequency averaging is performed on the measurement data of the M points, out of the measurement time ranging from 0 to (M - 1)t (M is a natural number), and measurement data of other times in the procedure S02 using the calculated rotation angle.

Citation List

Patent Literature

Patent Literature 1: JP 2020-169904 A

Non Patent Literature

Non Patent Literature 1: Ali. Masoudi, T. P. Newson, "Contributed Review: Distributed optical fibre dynamic strain sensing." Review of Scientific Instruments, vol.87, pp011501 (2016)

Non Patent Literature 2: Ken'ichi Nishiguchi, Che-Hsien Li, Artur Guzik, Mitsunori Yokoyama, Kinzo Kishida, "Fabrication of Fiber-Optic Distributed Acoustic Sensor and Its Signal Processing", IEICE Technical Report ,115(202), pp29-34 (2015)

Non Patent Literature 3: Yoshifumi Wakisaka, Daisuke Iida, Hiroyuki Oshida, and Nazuki Honda, "Fading Suppression of Φ-OTDR With the New Signal Processing Methodology of Complex Vectors Across Time and Frequency Domains," J. Lightwave Technol. 39, 4279-4293 (2021)

Summary of Invention

Technical Problem

The optimum value of the rotation angle, calculated by the method of the procedure S01 of the conventional technology, temporally changes due to a temporal change in an optical characteristic such as an oscillation frequency of a laser, a temperature change of a measurement target optical fiber, application of a large dynamic strain to the measurement target optical fiber, and the like. Therefore, in distributed vibration measurement over a long period of time, the optimum value of the rotation angle needs to be continuously updated and processing of the procedure S02 and the procedure subsequent thereto needs to be performed.

However, the conventional technology, as described in Non Patent Literature 3 and Patent Literature 1, does not disclose a method of performing the processing of the procedure S02 and the procedure subsequent thereto concurrent with continuously updating the optimum value of the rotation angle is not indicated. Furthermore, when frequency averaging is performed on measurement data, used for calculating the rotation angle, using the calculated rotation angle, the data cannot be streamed: the measurement data needs to be held on a memory of a calculator until the frequency averaging is completed.

An object of the present disclosure is to enable stream processing of data and to prevent deterioration of an SN ratio and vibration measurement accuracy, without increasing memory size requirements of a calculator, even in measurement for a long period of time.

Solution to Problem

The present disclosure relates to a signal processing method for performing the processing of the procedure S02 and the procedure subsequent thereto concurrent with continuously updating an optimum value of a rotation angle. The present disclosure enables stream processing of data, and eliminates the need, for measurement data, to be held on a memory of a calculator until completion of frequency averaging.

Specifically, a measurement system of the present disclosure includes:

a measurement device configured to measure scattered light, which is brought by scattering of a plurality of light pulses having different optical frequencies, in an optical fiber; and

a signal processing device of the present disclosure configured to acquire measurement data of scattered light measured by the measurement device, calculate a scattered light vector $r_i$ of scattered light at a discretional point of the optical fiber, and calculate a phase change at the discretional point of the optical fiber using a calculated scattered light vector $r_i$.

The signal processing device of the present disclosure executes a signal processing method of the present disclosure. The signal processing method of the present disclosure is a signal processing method for performing signal processing of measurement data of scattered light, which is brought by scattering of N light pulses having different optical frequencies, in an optical fiber, the signal processing method including:

calculating a scattered light vector $r_i$ with the each of the optical frequencies of scattered light, falling within a predetermined time range in which measurement is allowed at any point of the optical fiber;

averaging scattered light vectors $r_i$ with each of the optical frequencies in terms of the time range;

calculating a rotation angle $\alpha_i$ for correcting a phase with each of the optical frequencies using a time average vector $r_{i\_avet}$ obtained by the averaging; and

correcting the phase of the scattered light vector $r_i$ with each of the optical frequencies by rotating the phase of the scattered light vector $r_i$ with each of the optical frequencies by the rotation angle $\alpha_i$.

The time range may be a time range of one discretional block out of a plurality of blocks into which an acquisition time of measurement data is divided. In this regard, the signal processing device of the present disclosure is configured to correct the phase of the scattered light vector $r_i$ with each of the optical frequencies, per block. Here, the signal processing device of the present disclosure may be configured to correct the phase of the scattered light vector $r_i$ using the calculated rotation angle $\alpha_i$ falling into a previous block.

The signal processing device of the present disclosure may include:

an AD conversion element configured to individually convert an in-phase component of scattered light into a digital signal;

an AD conversion function element configured to individually convert a quadrature component of scattered light into a digital signal;

an optical frequency separation unit configured to separate an in-phase component $I^{digital}$ and a quadrature component $Q^{digital}$ of the digital signals output from the AD conversion function element into a signal $I_i$ and a signal $Q_i$ with each of the optical frequencies;

a rotation angle calculation unit configured to calculate the scattered light vector $r_i$ using the signal $I_i$ and the signal $Q_i$ output from the optical frequency separation unit, average the calculated scattered light vectors $r_i$ in terms of the time range, and calculate the rotation angle $\alpha_i$ using a time average vector $r_{i\_avet}$ obtained by the averaging; and

a phase correction unit configured to correct the phase of the scattered light vector $r_i$, calculated by the rotation angle calculation unit, using the rotation angle $\alpha_i$ calculated by the rotation angle calculation unit,

in which processing in the AD conversion function element, the optical frequency separation unit, and the rotation angle calculation unit may be executable independently and in parallel.

The signal processing device of the present disclosure may be configured to

frequency-average vectors $R_i$ obtained by rotation by the rotation angle $\alpha_i$,

calculate an angle $\theta_{avef}$ of a frequency average vector $R_{avef}$ obtained by frequency-averaging, and

calculate a vibration waveform using the angle $\theta_{avef}$.

Note that the above-described disclosures can be combined in any possible manner.

Advantageous Effects of Invention

By using the present disclosure, a vibration waveform can be measured, while deterioration of an SN ratio and deterioration of vibration measurement accuracy are prevented, even in distributed vibration measurement for a long period of time. Furthermore, the present disclosure can enable stream processing of data concurrent with reducing memory size requirements of a calculator, and can be applied to real-time vibration waveform monitoring in principle. Therefore, the present disclosure can enable stream processing of data, and prevent deterioration of an SN ratio and vibration measurement accuracy, without increasing memory size requirements of a calculator, even in measurement for a long period of time.

Brief Description of Drawings

Fig. 1 illustrates a configuration example of a measurement device according to the present disclosure.
Fig. 2 illustrates an example of light pulses of the present disclosure.
Fig. 3 illustrates detailed processing of a signal processing unit 17d in terms of the K-th block.

Description of Embodiments

Hereinafter, an embodiment of the present disclosure will be described in detail with reference to the drawings. Note that the present disclosure is not limited to the embodiment to be described below. The embodiment is a merely example, and the present disclosure can be carried out in forms with various modifications and improvements on the basis of the knowledge of those skilled in the art. Note that components indicated by the same reference signs in the present specification and the drawings are the same components.

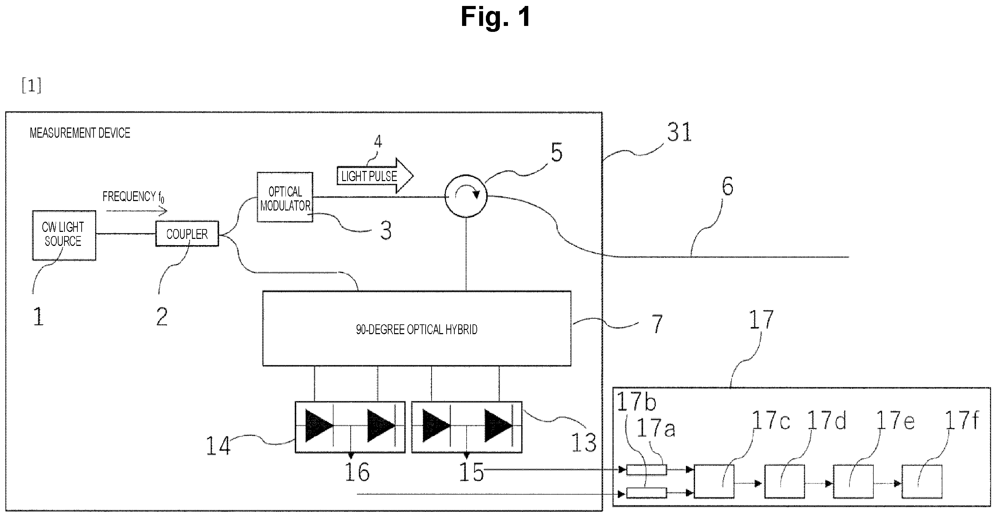

Fig. 1 illustrates a configuration example of a measurement system according to the present disclosure. The measurement system according to the present disclosure includes a measurement device 31 that performs coherent detection using a 90-degree optical hybrid 7 in a reception system, and a signal processing device 17 that executes a signal processing method of the present disclosure.

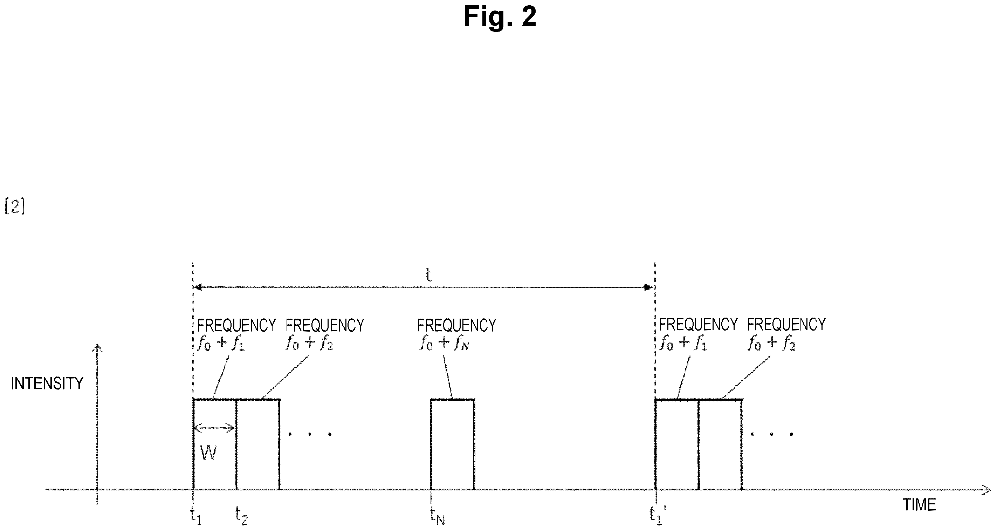

The measurement device 31 measures scattered light from a measurement target optical fiber 6 using a plurality of light pulses 4 having different optical frequencies. Continuous single-wavelength light having an optical frequency $f_0$ is emitted from a CW light source 1, and is split into reference light and probe light by a coupler 2. The probe light is shaped into the light pulses 4, as illustrated in Fig. 2, by an optical modulator 3. The light pulses 4 compose a sequence in which each light pulse is numbered i = 1, 2, ..., N (N is an integer representing the multiplexing number of optical frequencies), the i-th optical frequency $f_i$ is set to $f_i = f_0 + \Delta f_i$ (i is an integer) and each pulse width W is set to a value corresponding to the spatial resolution of measurement in the longitudinal direction of the optical fiber. $\Delta f_i$ is a modulation frequency given from the modulator 3, and is a shift amount from the laser frequency $f_0$ of the CW light source 1. The optical frequency $f_i$ is selected such that intensities of scattered light at each time and each point are sufficiently separated to the extent that different values i can be regarded as uncorrelated. The pulse width W corresponds to the spatial resolution.

The optical modulator 3 can be any device capable of generating the light pulses 4, having the pulse width W, at the sampling interval t of vibration, and may include a plurality of devices each of which is similar to the above. For example, modulation using an LN modulator-based modulator such as a single side band (SSB) modulator may be used, a frequency-variable acousto-optic (AO) modulator or the like may be used, or intensity modulation may be further performed by a semiconductor optical amplifier (SOA) or the like in order to increase an extinction ratio in pulsing.

The light pulses 4 are injected into the measurement target optical fiber 6 via a circulator 5. Here, light scattered at each point in the longitudinal direction of the optical fiber 6 returns to the circulator 5 as backscattered light and enters one input of the 90-degree optical hybrid 7. The reference light split by the coupler 2 enters the other input of the 90-degree optical hybrid 7.

The internal structure of the 90-degree optical hybrid 7 may be any structure having the functions of a 90-degree optical hybrid. Out of four outputs of the 90-degree optical hybrid 7, two outputs are detected by a balance detector 13, and an electrical signal 15 that is an analog in-phase component $I^{analog}$ is output. The remaining two outputs of the 90-degree optical hybrid are detected by a balance detector 14, and an electrical signal 16 that is an analog quadrature component $Q^{analog}$ is output. As a result, the light intensity of the in-phase component and the light intensity of the quadrature component are individually measured in regard to the scattered light, which is brought by scattering of a plurality of light pulses having different optical frequencies, in the optical fiber.

The electrical signal 15 and the electrical signal 16 are sent to the signal processing device 17, which includes an AD conversion function element 17a and an AD conversion function element 17b capable of sampling optical frequency bands of signals, without aliasing. The signal processing device 17 performs signal processing on digital signals of an in-phase component $I^{digital}$ and a quadrature component $Q^{digital}$, which are digitized and output from the AD conversion function element 17a and the AD conversion function element 17b. Specifically, a signal processing unit 17c separates the in-phase component $I^{digital}$ and the quadrature component $Q^{digital}$ into a signal $I_i$ and a signal $Q_i$ of scattered light deriving from a light pulse with each optical frequency $f_i$ (i = 1, 2, ..., N) included in the light pulses 4.

That is, the signal processing unit 17c functions as an "optical frequency separation unit", and separates the signal $I_i$ of an in-phase component and the signal $Q_i$ of a quadrature component, obtained by injecting a light pulse with each frequency $f_0 + f_i$ component alone, by performing signal processing on $I^{digital}$ in which in-phase components related to all i are superimposed, and $Q^{digital}$ in which quadrature components related to all i are superimposed. As a specific signal processing method, for example, passing $I^{digital}$ and $Q^{digital}$ through a digital bandpass filter having a center frequency of $f_0 + \Delta f_i$ and a passband of $2/W$ is conceivable. For example, when a finite impulse response (FIR) filter, having a filter characteristic also causing a delay, is used, in order to compensate for the delay, processing such as backward advancing a filtered signal by a delayed time is also performed.

When the filter characteristic of the digital bandpass filter is set to a specification in which measurement data is capable of being streamed in consideration of the memory size of a calculator to be used and the like, the measurement data is streamed up to the signal processing unit 17c. For example, in using an FIR filter as the digital bandpass filter, since a too large number of taps of the filter or too large significant point numbers of the filter coefficient is not suitable for stream processing in terms of the memory and calculation speed of the calculator to be used, the number of taps of the filter and the significant point numbers of the filter coefficient are set on the basis of the memory and calculation speed of the calculator to be used, so that streaming processing is enabled.

On the basis of the signal $I_i$ and the signal $Q_i$ acquired by the signal processing unit 17c, a signal processing unit 17d, a signal processing unit 17e, and a signal processing unit 17f continuously perform phase calculation. The roles of the signal processing units are as follows. Assume that the injection interval of a light pulse of the i-th optical frequency, that is, a sampling interval of vibration is t, and vibration data is acquired at a time kt using an integer k. The interval between t1 and t1' in Fig. 2 is t. Furthermore, a distance from the incident end is z. By phase calculation being performed in terms of every distance z, the phase at each point in the measurement target optical fiber 6 can be calculated.

The signal processing unit 17d: functions as a "rotation angle calculation unit".

Specifically, using a signal $I_i(kt, z)$ and a signal $Q_i(kt, z)$, a scattered light vector $r_i(kt, z)$ of scattered light with the i-th optical frequency, falling within a predetermined time range in which measurement is allowed at a point of the measurement target optical fiber 6, is calculated. Data of the calculated scattered light vector $r_i(kt, z)$ is continuously streamed to the signal processing unit 17e.

Furthermore, a rotation angle $\alpha_i(z)$ with each optical frequency $f_i$ is calculated from the scattered light vector $r_i(kt, z)$. However, unlike the conventional method, the measurement data is divided into blocks each having a predetermined time range on the time axis, and the rotation angle is calculated and updated per block having the time range. The rotation angle $\alpha_i(z)$ calculated and updated per block is passed to the signal processing unit 17e. Here, in the present embodiment, division is performed such that any one block has the predetermined number of light pulses with the same frequency. Hereinafter, an example will be described in which the predetermined time range is the predetermined number of time points M and the rotation angle is calculated and updated per measurement time Mt.

In addition, in the conventional method, all measurement data is treated as one block, or the rotation angle is calculated using measurement data of the first several points, and the calculated rotation angle is used for all the data, whereas in the present embodiment, the rotation angle is updated per block on all such occasions.

That is, assuming that k = 0 is designated as the first point of measurement data and calculation of the rotation angle is started from the first point, for example, measurement data of the scattered light vector $r_i(kt, z)$ in which k ranges from 0 to M - 1 falls into the first block, and measurement data in which k ranges from M to 2M - 1 in the second block. K is used as numeral symbols for distinguishing the blocks. For example, in the above example, a block in which k ranges from 0 to M - 1 is a block K = 1, and a block in which k ranges from M to 2M - 1 is a block K = 2. The K-th block is measurement data in which k ranges from M(K - 1) to MK - 1. In order to calculate the rotation angle per block, the values vary depending on the block K, and the rotation angle is denoted as $\alpha_i(z, K)$. With respect to each of the blocks, the calculation method of the rotation angle is performed in a manner similar to the procedure S01 of the conventional technology.

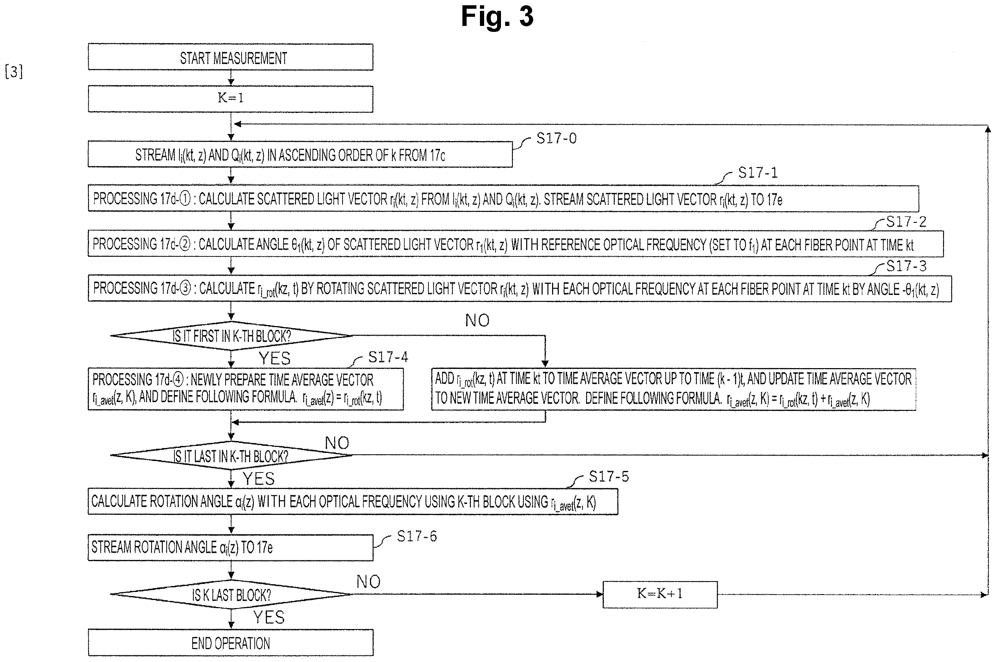

Detailed processing of the signal processing unit 17d in terms of the K-th block is illustrated in Fig. 3.

Processing S17d-0: As an input to the signal processing unit 17d, the signal $I_i(kt, z)$ and the signal $Q_i(kt, z)$ are streamed in ascending order of k from 17c.

Processing S17d-1: The scattered light vector $r_i(kt, z)$ is calculated from the signal $I_i(kt, z)$ and the signal $Q_i(kt, z)$ at the time kt. For example, assuming that the imaginary unit is j, the following is calculated.

(Math. 1)

$$r_i(kt, z) = I_i(kt, z) + jQ_i(kt, z) \quad (1)$$

Data of the calculated scattered light vector is sequentially streamed to the signal processing unit 17e.

Processing S17d-2:

The reference optical frequency is set to $f_1$. However, since a free choice of the reference optical frequency is possible, the reference optical frequency may not be $f_1$. An angle $\theta_1(kt, z)$ of a scattered light vector $r_1(kt, z)$ with the reference optical frequency at each fiber point at the time kt is calculated. $\theta_1(kt, z)$ can be expressed by, for example, the following formula.

(Math. 2)

$$\theta_1(kt,\ z)\ =\ \arg[r_1(kt,\ z)]\ \ (2)$$

Processing S17d-3:

The scattered light vector $r_i(kt, z)$ with each optical frequency at each fiber point at the time kt is rotated by an angle $-\theta_1(kt, z)$ to be $r_{i\_rot}(kz, t)$. $r_{i\_rot}(kz, t)$ can be expressed by, for example, the following formula.
(Math. 3)

$$r_{i\_rot}(kz,\ t)\ =\ \exp[-\theta_1(kt,\ z)]\ *\ r_i(kt,\ z)\ \ (3)$$

Processing S17d-4:

Given that the time kt is the first time M(K - 1) in the K-th block, a time average vector $r_{i\_avet}(z, K)$ is newly prepared, and $r_{i\_avet}(z) = r_{i\_rot}(kz, t)$ is defined. Given that the time kt is the second or later time of the K-th block, $r_{i\_rot}(kz, t)$ at the time kt is added to a time average vector up to a time (k - 1)t, and the time average vector is updated to a new time average vector. The time average vector $r_{i\_avet}(z, K)$ is expressed by the following formula.
(Math. 4)

$$r_{i\_avet}(z,\ K)\ =\ r_{i\_rot}(kz,\ t)\ +\ r_{i\_avet}(z,\ K)\ \ (4)$$

Processing S17d-5:

The rotation angle $\alpha_i(z)$ with each optical frequency using the K-th block is calculated using $r_{i\_avet}(z, K)$ obtained by completion of the processing S17d-4 in a case where the time kt is the last time MK - 1 in the K-th block. $\alpha_i(z)$ is expressed by the following formula.
(Math. 5)

$$\alpha_i(z,\ K)\ =\ -\arg[r_{i\_avet}(z,\ K)]\ \ (5)$$

As a result, a difference in the phase offset value of each optical frequency included in the block can be obtained.

Processing S17d-6:

After completion of the processing S17d-5, the rotation angle $\alpha_i(z)$ is passed to the signal processing unit 17e.
The signal processing unit 17e: functions as a "phase correction unit", and executes the procedure S02 described above.
The signal processing unit 17e corrects the phase of the scattered light vector $r_i$ using the rotation angle $\alpha_i(z)$ calculated by the signal processing unit 17d. For example, the signal processing unit 17e rotates the scattered light vector $r_i$ with each optical frequency $f_i$ included in the K block by the rotation angle $\alpha_i(z)$ and then averages the rotated vectors to calculate a frequency average vector $R_{avef}$.
However, unlike the conventional method, since the rotation angle $\alpha_i$ is updated per block of the time Mt, in the present disclosure, the rotation angle, calculated using the previous block K - 1 in the signal processing unit 17d, is used as the rotation angle used in calculating the frequency average of scattered light vectors belonging to a certain block K. That is, detailed processing of the signal processing unit 17e, in terms of the K-th block, is as follows.
Processing S17e-1: The scattered light vector $r_i(kt, z)$ with each optical frequency at the time kt is rotated by the calculated rotation angle $\alpha_i(z, K - 1)$ falling into the (K - 1)-th block to calculate a rotated vector $R_i(kz, t)$. $R_i(kz, t)$ is expressed by the following formula.
(Math. 6)

$$R_i(kz,\ t)\ =\ \exp(j\ \cdot\ \alpha_i(z,\ K\ -\ 1))\ \cdot\ r_i(kt,\ z)\ \ (6)$$

By calculating the vector $R_i(kz, t)$, a difference in the phase offset of the scattered light vector $r_i$ at each optical frequency can be corrected.
Processing S17e-2: A vector obtained by frequency-averaging the rotated vector $R_i(kz, t)$ is calculated. In addition, the final result does not change whichever vector averaging or vector synthesis (simple vector sum) is performed;

a frequency average vector $R_{avef}(kz, t)$ is obtained by the vector synthesis in the actual calculation procedure. $R_{avef}(kz, t)$ is expressed by the following formula.
[Math. 7]

$$R_{\mathrm{avef}}(kz, t) = \sum_{i=1}^{N} R_i(kz, t) \qquad (7)$$

Processing S17e-3: An angle $\theta_{avef}(kz, t)$ of the frequency average vector $R_{avef}(kz, t)$ is calculated and passed to the signal processing unit 17f. $\theta_{avef}(kz, t)$ is expressed by the following formula.
[Math. 8]

$$\theta_{\mathrm{avef}}(kz, t) = \arg[R_{\mathrm{avef}}(kz, t)] \qquad (8)$$

In addition, in the first block of K = 1, the rotation angle is not yet acquired since there is no data of a previous block, and the procedure of the signal processing unit 17e cannot be performed. Therefore, the processing after the signal processing unit 17e is not performed: measurement during the measurement time of the first Mt is regarded as pre-measurement. Alternatively, only the scattered light vectors $r_i(kt, z)$ falling into the measurement time of the first Mt can be separately stored in the calculator and calculated up to the vibration waveform by the conventional method.

The signal processing unit 17f: executes the above-described procedure S03.

The signal processing unit 17f calculates a phase change at a discretional point of the measurement target optical fiber 6, using the angle $\theta_{avef}(kz, t)$ of the frequency average vector $R_{avef}$ obtained by the signal processing unit 17e. For example, the signal processing unit 17f calculates a phase difference between two points separated by a gauge length, performs phase connection processing or the like, and calculates a vibration waveform. A specific calculation method is similar to the conventional method.

A feature of the present disclosure lies in the signal processing units 17d and 17e. The signal processing unit 17d divides signals $I_i$ and $Q_i$, obtained by measurement, into blocks corresponding to the number of time points M, and calculates and updates a rotation angle $\alpha_i$ per block of a measurement time Mt, and thereby copes with a temporal change, in an optimum value, caused by a temporal change in an optical characteristic such as an oscillation frequency of a laser included in the CW light source 1, a temperature change of the measurement target optical fiber 6 itself, application of a large dynamic strain to the measurement target optical fiber 6, and the like. By short measurement time Mt per block, relative to a time scale of a temporal change in an optical characteristic such as an oscillation frequency of a laser included in the CW light source 1, a temperature change of the measurement target optical fiber 6 itself, and application of a large dynamic strain to the measurement target optical fiber 6, the rotation angle can be updated with sufficient fineness.

With such a setting, there is no issue even when the rotation angle $\alpha_i$ falling into the immediately previous block K - 1 calculated by the signal processing unit 17d is used as the rotation angle $\alpha_i$ used in calculation, with the signal processing unit 17e, of the frequency average of scattered light vectors $r_i$ belonging to the block K. Furthermore, since the signal processing unit 17d outputs the rotation angle $\alpha_i$ falling into the immediately previous block K - 1 to the signal processing unit 17e, data of the scattered light vector $r_i(kt, z)$ does no longer need to be held in the memory of the signal processing device 17 after completion of update, with the signal processing unit 17d, of the scattered light vector $r_{i\_avet}(z)$.

As described above, stream processing in the present disclosure, processing in the AD conversion function elements 17a and 17b, the signal processing unit 17c that functions as the optical frequency separation unit, and the signal processing unit 17d that functions as the rotation angle calculation unit can be executable independently and in parallel. As a result, in the present disclosure, the memory of the calculator can be reduced as compared with the memory of the calculator, where the signal processing unit 17d needs to hold all data of scattered light vectors belonging to a block K, in the conventional technology, in which the rotation angle itself, calculated by the signal processing unit 17d, falling into the block K is used as the rotation angle $\alpha_i$ used in calculation, with the signal processing unit 17e, of the frequency average of scattered light vectors $r_i$ belonging to the block K.

However, the length of the measurement time Mt per block is also related to the calculation accuracy of the rotation angle $\alpha_i$. The measurement time Mt per block is chosen to be long as the rotation angle $\alpha_i$ can be calculated with sufficient accuracy, and is chosen to be short in contrast with a time scale of a temporal change in an optical characteristic such as an oscillation frequency of a laser included in the CW light source 1, a temperature change of the measurement target optical fiber 6 itself, and application of a large dynamic strain to the measurement target optical fiber 6, so that the calculation accuracy of the rotation angle $\alpha_i$ can also be secured. Such a setting is possible in many situations. For example, experimental knowledge has shown that sufficient accuracy of the rotation angle $\alpha_i$ can be obtained by setting M to about 100 (Non Patent Literature 3), but Mt is about 100 ms even when the transmission period t of a light pulse is set to 1 ms; this is considered to be sufficiently fine under the condition that a time scale of a temporal change of an optical characteristic such as an oscillation frequency of a laser included in the CW light source 1, a temperature change of the measurement target optical fiber 6 itself, and application of a large dynamic strain to the measurement target optical fiber 6 is 1 s or more.

The device of the present disclosure can also be implementation on a computer and in a program, and the program can be recorded in a recording medium or provided through a network. A program according to the present disclosure is a program for implementation on a computer as each functional unit included in the device according to the present disclosure and is a program for directing a computer to execute each step included in a method executed by the device according to the present disclosure.

Reference Signs List

| | |
|---|---|
| 1 | CW light source |
| 2 | Coupler |
| 3 | Optical modulator |
| 4 | Light pulse |
| 5 | Circulator |
| 6 | Measurement target optical fiber |
| 7 | 90-degree optical hybrid |
| 13, 14 | Balance detector |
| 15, 16 | Electrical signal |
| 17 | Signal processing device |
| 17a, 17b | AD conversion function element |
| 17c, 17d | Signal processing unit |
| 31 | Measurement device |

**Claims**

1. A signal processing device configured to:

   acquire measurement data of scattered light, which is brought by scattering of a plurality of light pulses having different optical frequencies, in an optical fiber;
   calculate a scattered light vector $r_i$ with each of the optical frequencies of scattered light, falling within a predetermined time range in which measurement is allowed at any point of the optical fiber;
   average scattered light vectors $r_i$ with each of the optical frequencies in terms of the time range;
   calculate a rotation angle $\alpha_i$ for correcting a phase with each of the optical frequencies using a time average vector $r_{i\_avet}$ obtained by the averaging; and
   correct the phase of the scattered light vector $r_i$ with each of the optical frequencies by rotating the phase of the scattered light vector $r_i$ with each of the optical frequencies by the rotation angle $\alpha_i$.

2. The signal processing device according to claim 1,

   wherein the time range is a time range of one discretional block out of a plurality of blocks into which an acquisition time of measurement data is divided, and
   the signal processing device is configured to correct the phase of the scattered light vector $r_i$ with each of the optical frequencies, per block.

3. The signal processing device according to claim 2 configured to
   correct the phase of the scattered light vector $r_i$ using the calculated rotation angle $\alpha_i$ falling into a previous block.

4. The signal processing device according to claim 1 comprising:

   an AD conversion function element configured to individually convert an in-phase component and a quadrature component of scattered light into digital signals;
   an optical frequency separation unit configured to separate an in-phase component $I^{digital}$ and a quadrature component $Q^{digital}$ of the digital signals output from the AD conversion function element into a signal $I_i$ and a signal

$Q_i$ with each of the optical frequencies;
a rotation angle calculation unit configured to calculate the scattered light vector $r_i$ using the signal $I_i$ and the signal $Q_i$ output from the optical frequency separation unit, average the calculated scattered light vectors $r_i$ in terms of the time range, and calculate the rotation angle $\alpha_i$ using the time average vector $r_{i\_avet}$ obtained by the averaging; and
a phase correction unit configured to correct the phase of the scattered light vector $r_i$, calculated by the rotation angle calculation unit, using the rotation angle $\alpha_i$ calculated by the rotation angle calculation unit,
wherein processing in the AD conversion function element, the optical frequency separation unit, and the rotation angle calculation unit are executable independently and in parallel.

5. The signal processing device according to claim 1 configured to:

frequency-average vectors $R_i$ obtained by rotation by the rotation angle $\alpha_i$,
calculate an angle $\theta_{avef}$ of a frequency average vector $R_{avef}$ after frequency-averaging, and
calculate a vibration waveform using the angle $\theta_{avef}$.

6. A measurement system comprising:

a measurement device configured to measure scattered light, which is brought by scattering of a plurality of light pulses having different optical frequencies, in an optical fiber; and
the signal processing device according to any one of claims 1 to 5 configured to acquire measurement data of scattered light measured by the measurement device, calculate a scattered light vector $r_i$ of scattered light at a discretional point of the optical fiber, and calculate a phase change of the calculated scattered light vector $r_i$.

7. A signal processing method for performing signal processing of measurement data of scattered light, which is brought by scattering of a plurality of light pulses having different optical frequencies, in an optical fiber, the signal processing method comprising:

calculating a scattered light vector $r_i$ with each of the optical frequencies of scattered light, falling within a predetermined time range in which measurement is allowed at any point of the optical fiber;
averaging scattered light vectors $r_i$ with each of the optical frequencies in terms of the time range;
calculating a rotation angle $\alpha_i$ for correcting a phase with each of the optical frequencies using a time average vector $r_{i\_avet}$ obtained by the averaging; and
correcting the phase of the scattered light vector $r_i$ with each of the optical frequencies by rotating the phase of the scattered light vector $r_i$ with each of the optical frequencies by the rotation angle $\alpha_i$.

**Fig. 1**

[1]

MEASUREMENT DEVICE

31

6

EP 4 589 261 A1

FREQUENCY $f_0$

LIGHT PULSE

4

OPTICAL MODULATOR

5

3

CW LIGHT SOURCE

COUPLER

1

2

90-DEGREE OPTICAL HYBRID

7

17

14

13

16

15

17b

17a

17c  17d  17e  17f

**Fig. 2**

EP 4 589 261 A1

# Fig. 3

[3]

START MEASUREMENT

$K = 1$

STREAM $I_i(kt, z)$ AND $Q_i(kt, z)$ IN ASCENDING ORDER OF k FROM 17c — S17-0

PROCESSING 17d-① : CALCULATE SCATTERED LIGHT VECTOR $r_i(kt, z)$ FROM $I_i(kt, z)$ AND $Q_i(kt, z)$. STREAM SCATTERED LIGHT VECTOR $r_i(kt, z)$ TO 17e — S17-1

PROCESSING 17d-② : CALCULATE ANGLE $\theta_1(kt, z)$ OF SCATTERED LIGHT VECTOR $r_1(kt, z)$ WITH REFERENCE OPTICAL FREQUENCY (SET TO $f_1$) AT EACH FIBER POINT AT TIME kt — S17-2

PROCESSING 17d-③ : CALCULATE $r_{i\_rot}(kz, t)$ BY ROTATING SCATTERED LIGHT VECTOR $r_i(kt, z)$ WITH EACH OPTICAL FREQUENCY AT EACH FIBER POINT AT TIME kt BY ANGLE $-\theta_1(kt, z)$ — S17-3

IS IT FIRST IN K-TH BLOCK?

NO → ADD $r_{i\_rot}(kz, t)$ AT TIME kt TO TIME AVERAGE VECTOR UP TO TIME $(k - 1)t$, AND UPDATE TIME AVERAGE VECTOR TO NEW TIME AVERAGE VECTOR. DEFINE FOLLOWING FORMULA. $r_{i\_avet}(z, K) = r_{i\_rot}(kz, t) + r_{i\_avet}(z, K)$

YES → PROCESSING 17d-④ : NEWLY PREPARE TIME AVERAGE VECTOR $r_{i\_avet}(z, K)$, AND DEFINE FOLLOWING FORMULA. $r_{i\_avet}(z) = r_{i\_rot}(kz, t)$ — S17-4

IS IT LAST IN K-TH BLOCK?

YES → CALCULATE ROTATION ANGLE $\alpha_i(z)$ WITH EACH OPTICAL FREQUENCY USING K-TH BLOCK USING $r_{i\_avet}(z, K)$ — S17-5

STREAM ROTATION ANGLE $\alpha_i(z)$ TO 17e — S17-6

IS K LAST BLOCK?

NO → $K = K + 1$

YES → END OPERATION

EP 4 589 261 A1

## INTERNATIONAL SEARCH REPORT

| International application No. |
|---|
| **PCT/JP2022/034477** |

### A. CLASSIFICATION OF SUBJECT MATTER

*G01D 5/353*(2006.01)i
FI:    G01D5/353 B

According to International Patent Classification (IPC) or to both national classification and IPC

### B. FIELDS SEARCHED

Minimum documentation searched (classification system followed by classification symbols)

G01D5/00-G01D5/252; G01D5/39-G01D5/62; G01H9/00; G01B9/00-11/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-169904 A (NIPPON TELEGRAPH AND TELEPHONE CORPORATION) 15 October 2020 (2020-10-15) <br> paragraphs [0030]-[0077], fig. 1-10 | 1-7 |
| A | US 2020/0370949 A1 (NEC LABORATORIES AMERICA, INC.) 26 November 2020 (2020-11-26) <br> paragraphs [0019]-[0047], fig. 1-4 | 1-7 |
| A | US 2022/0120608 A1 (NEC LABORATORIES AMERICA, INC.) 21 April 2022 (2022-04-21) <br> paragraphs [0022]-[0071], fig. 1-7 | 1-7 |

☐ Further documents are listed in the continuation of Box C.       ☑ See patent family annex.

| | |
|---|---|
| *     Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **10 November 2022** | **22 November 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/034477**

| Patent document cited in search report | | | Publication date (day/month/year) | Patent family member(s) | | | Publication date (day/month/year) |
|---|---|---|---|---|---|---|---|
| JP | 2020-169904 | A | 15 October 2020 | US | 2022/0155139 | A1 | |
| | | | | paragraphs [0042]-[0098], fig. 1-10 | | | |
| | | | | WO | 2020/203332 | A1 | |
| | | | | EP | 3951334 | A1 | |
| | | | | CN | 113646614 | A | |
| US | 2020/0370949 | A1 | 26 November 2020 | WO | 2020/237038 | A1 | |
| US | 2022/0120608 | A1 | 21 April 2022 | WO | 2022/087312 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020169904 A

**Non-patent literature cited in the description**

- **ALI. MASOUDI** ; **T. P. NEWSON**. Contributed Review: Distributed optical fibre dynamic strain sensing. *Review of Scientific Instruments*, 2016, vol. 87, 011501
- **KEN'ICHI NISHIGUCHI** ; **CHE-HSIEN LI** ; **ARTUR GUZIK** ; **MITSUNORI YOKOYAMA** ; **KINZO KISHI-DA**. Fabrication of Fiber-Optic Distributed Acoustic Sensor and Its Signal Processing. *IEICE Technical Report*, 2015, vol. 115 (202), 29-34
- **YOSHIFUMI WAKISAKA** ; **DAISUKE IIDA** ; **HIR-OYUKI OSHIDA** ; **NAZUKI HONDA**. Fading Suppression of Φ-OTDR With the New Signal Processing Methodology of Complex Vectors Across Time and Frequency Domains. *J. Lightwave Technol.*, 2021, vol. 39, 4279-4293